# EUROPÄISCHE PATENTSCHRIFT

(11) **EP 3 949 309 B1**
(45) Veröffentlichungstag und Bekanntmachung des Hinweises auf die Patenterteilung: **05.04.2023**
(21) Anmeldenummer: 20705634.2
(22) Anmeldetag: 10.02.2020
(51) Int. Cl.: H04L 9/40

(54) **DIGITALES ZERTIFIKAT UND VERFAHREN ZUM SICHEREN BEREITSTELLEN EINES ÖFFENTLICHEN SCHLÜSSELS**
DIGITAL CERTIFICATE AND METHOD FOR SECURELY PROVIDING A PUBLIC KEY
CERTIFICAT DIGITAL ET MÉTHODE SÉCURE POUR FOURNIER UNE CLÉ PUBLIQUE

(30) Priorität: 27.03.2019 DE 102019107932
(43) Veröffentlichungstag der Anmeldung: 09.02.2022
(73) Patentinhaber: MTG AG, 64293 Darmstadt (DE)
(72) Erfinder: EVANGELOS, Karatsiolis, 64285 Darmstadt (DE)
(74) Vertreter: Habermann Intellectual Property Partnerschaft von Patentanwälten mbB
(86) Internationale Anmeldenummer: PCT/EP2020/053357
(87) Internationale Veröffentlichungsnummer: WO 2020/192996

(56) Entgegenhaltungen:
- US-A1- 2007 061 576
- US-A1- 2009 198 997
- US-B1- 10 057 061

## Beschreibung

Die Erfindung betrifft ein digitales Zertifikat zur Verwendung in einer Public-Key-Infrastruktur, wobei das digitale Zertifikat Zertifikatinhaberinformationen und Zertifikatschlüsselinformationen enthält, und wobei das digitale Zertifikat von einer Zertifizierungsstelle mit einer digitalen Zertifikatsignatur signiert ist, mit welcher die Zertifikatinhaberinformationen und mindestens eine Zertifikatschlüsselinformation signiert sind.

Ein digitales Zertifikat ist ein digitaler Datensatz, der in dem Datensatz enthaltene Informationen zu einem Zertifikatinhaber bestätigt, wobei die Authentizität des digitalen Zertifikats durch geeignete Verfahren überprüft werden kann. Ein digitales Zertifikat wird üblicherweise durch eine vertrauenswürdige Zertifizierungsstelle ausgestellt und bestätigt, wobei die Zertifizierungsstelle das digitale Zertifikat mit einer digitalen Zertifikatsignatur signiert. Die Zertifikatsignatur des digitalen Zertifikats kann zu einem späteren Zeitpunkt von der Zertifizierungsstelle oder von einer geeigneten Validierungseinrichtung überprüft werden, um festzustellen, ob das digitale Zertifikat nach der Zertifizierung durch die vertrauenswürdige Zertifizierungsstelle modifiziert wurde. Digitale Zertifikate können beispielsweise zur Kommunikation zwischen zwei Rechnern verwendet werden, wobei die Kommunikation regelmäßig nur dann durchgeführt wird, wenn die Authentizität des digitalen Zertifikats festgestellt werden kann.

Digitale Zertifikate können innerhalb einer Public-Key-Infrastruktur zur Übermittlung eines öffentlichen Schlüssels des Zertifikatinhabers verwendet werden. Zu diesem Zweck enthält das digitale Zertifikat Zertifikatinhaberinformationen und Zertifikatschlüsselinformationen. Es sind derzeit verschiedene Standards für digitale Zertifikate bekannt, die für die sichere Datenübertragung zwischen verschiedenen Teilnehmern innerhalb einer Public-Key-Infrastruktur verwendet werden können. Ein bekanntes Beispiel für ein standardisiertes Zertifikat ist ein X.509-Zertifikat. Das X.509-Zertifikat enthält neben den Zertifikatinhaberinformationen unter anderem Zertifikatschlüsselinformationen, die einen öffentlichen Schlüssel des Zertifikatinhabers und eine zugeordnete Schlüsseleigenschaftsinformation umfassen. Sobald ein Empfänger des X.509-Zertifikats dessen Authentizität verifiziert hat kann der Empfänger den in diesem X.509-Zertifikat enthaltenen öffentlichen Schlüssel des Zertifikatsinhabers verwenden, um eine nachfolgende Datenübertragung oder Kommunikation zwischen dem Sender des digitalen Zertifikats und dem Empfänger beispielsweise signieren oder verschlüsseln zu können. Anhand der Schlüsseleigenschaftsinformationen kann der Empfänger rasch ermitteln, für welches Verschlüsselungsverfahren der in dem X.509-Zertifikat enthaltene öffentliche Schlüssel geeignet ist und verwendet werden kann.

In gleicher Weise kann auch ein öffentlicher Schlüssel des Empfängers zurück an den Sender übermittelt werden. Anschließend können der Sender und der Empfänger mit den untereinander ausgetauschten öffentlichen Schlüsseln eine gesicherte Kommunikation und Datenübertragung durchführen.

Beispielsweise in US 2007/0061576 A1 oder in US 2009/0198997 A1 sind verschiedene Verfahren zur gesicherten Kommunikation mit Hilfe von derartigen Verschlüsselungsverfahren und zur Verwaltung der dafür verwendeten Schlüssel beschrieben. In US 10,057,061 B1 ist beschrieben, wie ein digitales Zertifikat mit einem darin enthaltenen öffentlichen Schlüssel von einem Server abgerufen und anschließend für die gesicherte Kommunikation verwendet werden kann.

Im Hinblick auf eine zunehmend wichtige Absicherung einer Kommunikation zwischen dem Sender und dem Empfänger werden immer komplexere Verschlüsselungsverfahren entwickelt, deren Verschlüsselung von unbefugten Dritten möglichst schwer zu entschlüsseln ist. Es hat sich gezeigt, dass in vielen Fällen ein möglichst langer und teilweise viele Kilobyte oder sogar mehr als ein Megabyte lange Schlüssel ein besonders gut geschütztes Verschlüsselungsverfahren ermöglichen, bzw. begünstigen und eine unbefugte Entschlüsselung erheblich erschweren.

Gegebenenfalls müssen mehrere digitale Zertifikate von dem Sender an den Empfänger übermittelt werden, bevor das betreffende digitale Zertifikat einen öffentlichen Schlüssel für ein Verschlüsselungsverfahren enthält, das der Empfänger durchführen kann, da üblicherweise nicht jeder Empfänger jedes verfügbare Verschlüsselungsverfahren kennt oder anwenden kann. Der Austausch langer Schlüssel innerhalb eines digitalen Zertifikats, dessen Datenmenge dadurch entsprechend größer wird, behindert jedoch einen raschen Austausch dieser digitalen Zertifikate und damit einen schnellen Aufbau einer gesicherten Kommunikation zwischen einem Sender und einem Empfänger.

Es wird deshalb als eine Aufgabe der vorliegenden Erfindung angesehen, ein digitales Zertifikat so auszugestalten, dass ein möglichst rascher Austausch des digitalen Zertifikats begünstigt wird, wenn der an den Empfänger zu übermittelnde öffentliche Schlüssel eine große Schlüssellänge und eine entsprechend große Datenmenge aufweist.

Diese Aufgabe wird erfindungsgemäß dadurch gelöst, dass das digitale Zertifikat mindestens eine Ressourcenidentifizierungsinformation zu einer ersten digital kontaktierbaren Ressource aufweist, über die mindestens ein öffentlicher Schlüssel abgerufen werden kann, dass das digitale Zertifikat einen Zertifikatschlüsselhashwert aufweist, der dem mindestens einen über die mindestens eine Ressource abrufbaren öffentlichen Schlüssel zugeordnet ist, und dass die digitale Zertifikatsignatur auch den mindestens einen Zertifikatschlüsselhashwert signiert. Eine tatsächliche Übermittlung des öffentlichen Schlüssels innerhalb des digitalen Zertifikats ist im Hinblick auf eine sichere Übermittlung des öffentlichen Schlüssels nicht zwingend erforderlich. Es ist vielmehr ausreichend, dass ein mit einer geeigneten Hashfunktion von dem öffentlichen Schlüssel erzeugter Zertifikatschlüsselhashwert in dem digitalen Zertifikat enthalten ist und zusammen mit den Zertifikatinhaberinformationen signiert wird. Durch die von der vertrauenswürdigen Zertifizierungsstelle bei der Zertifizierung erzeugte digitale Zertifikatsignatur wird der Zertifikatschlüsselhashwert, der in eindeutiger Weise dem betreffenden öffentlichen Schlüssel zugeordnet ist, überprüfbar mit dem Zertifikatinhaber verknüpft. Der öffentliche Schlüssel kann bei Bedarf über die durch die Ressourcenidentifizierungsinformation vorgegebene Ressource abgerufen werden. Durch einen Vergleich eines ausgehend von dem abgerufenen öffentlichen Schlüssel von dem Empfänger ermittelten Schlüsselhashwerts mit dem in dem digitalen Zertifikat enthaltenen und signierten Zertifikatschlüsselhashwert kann von dem Empfänger überprüft und festgestellt werden, dass der von der Ressource abgerufene öffentliche Schlüssel tatsächlich dem Zertifikatinhaber zugeordnet ist und zwischenzeitlich auch nicht manipuliert wurde.

Die für das erfindungsgemäße digitale Zertifikat erforderliche Datenmenge kann vergleichsweise klein sein. Die Ressourcenidentifizierungsinformation kann beispielsweise ein standardisierter einheitlicher Bezeichner für Ressourcen (URI) sein. Ein häufig verwendetes Beispiel für einen einheitlichen Bezeichner für Ressourcen ist ein einheitlicher Ressourcenzeiger (URL), mit welchem eine Ressource lokalisiert und zudem über die zu verwendende Zugriffsmethode identifiziert wird. Bekannte Netzwerkprotokolle zur Datenübertragung zwischen Teilnehmern eines digitalen Netzwerks wie beispielsweise das HTTP-Protokoll oder das FTP-Protokoll verwenden standardisierte einheitliche Ressourcenzeiger. Mit derartigen Ressourcenidentifizierungsinformationen kann auf einen bei der betreffenden Ressource hinterlegten öffentlichen Schlüssel zugegriffen und der betreffende öffentliche Schlüssel von der Ressource abgerufen und zu einem Teilnehmer des Netzwerks übertragen werden.

Bei der Ressource kann es sich beispielsweise um eine von dem Zertifikatinhaber bereitgestellt und mit einem digitalen Netzwerk verbundene Speichereinrichtung handeln. Die Ressource kann ebenfalls eine von der vertrauenswürdigen Zertifizierungsstelle oder von einem Dritten bereitgestellte Speichereinrichtung sein. Es ist weiterhin auch möglich und für verschiedene Anwendungen zweckmäßig, dass die Ressource eine bei dem Empfänger des digitalen Zertifikats bereitgehaltene Speichereinrichtung ist, in welcher der Zertifikatinhaber vorab seinen öffentlichen Schlüssel hinterlegt hat. Die Ressource ist im Sinne der vorliegenden Erfindung digital kontaktierbar, wenn mit einem bekannten und gegebenenfalls standardisierten Verfahren eine Rechnereinrichtung eine datenübertragende Verbindung zu der Ressource herstellen und einen in der Ressource hinterlegten öffentlichen Schlüssel abrufen bzw. auf die Rechnereinrichtung übertragen kann.

Die Datenmenge des digitalen Zertifikats ist insbesondere bei einer Verwendung eines öffentlichen Schlüssels, der eine Schlüssellänge von mehreren Kilobyte oder sogar Megabyte aufweist, erheblich geringer als die für den öffentlichen Schlüssel benötigte Datenmenge. Das erfindungsgemäße digitale Zertifikat kann deshalb wesentlich schneller von einem Sender an einen Empfänger übermittelt und dort überprüft werden. In vielen Fällen muss das digitale Zertifikat zur Überprüfung an eine Validierungseinrichtung übermittelt werden, wofür ein weiterer Übermittlungsaufwand anfällt, der bei einem möglichst kleinen digitalen Zertifikat wiederum geringer als bei einem digitalen Zertifikat mit einer großen Datenmenge ist. Sobald feststeht, dass das digitale Zertifikat erfolgreich verifiziert wurde und der Empfänger den öffentlichen Schlüssel, dessen Zertifikatschlüsselhashwert in dem digitalen Zertifikat enthalten ist, für ein entsprechendes Verschlüsselungsverfahren bei einer nachfolgenden Kommunikation verwenden kann, kann der Empfänger den öffentlichen Schlüssel von der über die Ressourcenidentifizierungsinformation identifizierten Ressource abrufen und sich beschaffen. Falls das digitale Zertifikat jedoch verworfen werden sollte oder der mit diesem digitalen Zertifikat zur Verfügung gestellt öffentliche Schlüssel von dem Empfänger nicht verwendet werden kann, musste lediglich eine im Vergleich zu dem öffentlichen Schlüssel wesentliche kleinere Datenmenge von dem Sender an den Empfänger übertragen und gegebenenfalls zusätzlich zu einer Validierungseinrichtung übermittelt werden, bevor das digitale Zertifikat verworfen und gegebenenfalls durch ein anderes digitales Zertifikat ersetzt wird, welches dann jedoch erneut von dem Sender zu dem Empfänger übertragen werden muss.

Gemäß einer besonders vorteilhaften Ausgestaltung des Erfindungsgedankens ist vorgesehen, dass das digitale Zertifikat mehrere Zertifikathashwerte aufweist, die jeweils einem über die mindestens eine Ressource abrufbaren öffentliche Schlüssel zugeordnet sind. Auf diese Weise kann erreicht werden, dass das eine digitale Zertifikat auf mehrere öffentliche Schlüssel verweisen können, die je nach den jeweiligen Vorgaben des Senders oder des Empfängers wahlweise für die anschließende Verwendung und beispielsweise für eine Kommunikation zwischen dem Sender und dem Empfänger verwendet werden können. Der Austausch eines einzigen digitalen Zertifikats ermöglicht es damit, dem Empfänger mehrere öffentliche Schlüssel zur Verfügung zu stellen, ohne dass für jeden Schlüssel ein gesondertes Zertifikat übermittelt und dem Empfänger angeboten werden muss. Der Aufwand für die Überprüfung der Authentizität des digitalen Zertifikats und für die Auswahl eines geeigneten öffentlichen Schlüssels für die anschließende Verwendung einer Datenübertragung zwischen dem Sender und dem Empfänger kann dadurch erheblich reduziert werden.

Da bei dem erfindungsgemäßen digitalen Zertifikat nicht jeweils der vollständige öffentliche Schlüssel, sondern lediglich die jeweiligen Zertifikatschlüsselhashwerte und mindestens eine Ressourcenidentifizierungsinformation übermittelt werden müssen, können mit einem vergleichsweise kleinen und nur wenige Daten umfassenden digitalen Zertifikat mehrere und auch große Datenmengen beinhaltende öffentliche Schlüssel angeboten und zuverlässig zwischen dem Sender und dem Empfänger ausgetauscht werden.

Es ist einer Ausgestaltung des Erfindungsgedankens zufolge vorgesehen, dass die Zertifikatschlüsselinformationen für die mehreren öffentlichen Schlüssel jeweils mindestens eine zugeordnete Schlüsseleigenschaftsinformation enthalten. Die Schlüsseleigenschaftsinformation kann beispielsweise eine Information über das zugeordnete Verschlüsselungsverfahren sein oder weitere entweder notwendige oder optionale Parameter für die Verwendung des betreffenden öffentlichen Schlüssels enthalten. Die Schlüsseleigenschaftsinformationen können von dem Empfänger beispielsweise dazu verwendet werden, das jeweilige Verschlüsselungsverfahren zu identifizieren und im Anschluss daran zu entscheiden, ob das betreffende Verschlüsselungsverfahren für den Empfänger geeignet ist und der betreffende öffentliche Schlüssel von der Ressource abgerufen werden soll. Ein derartiges digitales Zertifikat kann dem zufolge auch in einer Public-Key-Infrastruktur eingesetzt werden, bei der die jeweiligen Teilnehmer verschiedene Verschlüsselungsverfahren einsetzen können und nicht vorab festgelegt werden muss, welches Verschlüsselungsverfahren für einen Datenaustausch zwischen dem jeweiligen Sender und Empfänger verwendet werden soll.

Es ist ebenso möglich, mit dem erfindungsgemäßen digitalen Zertifikat einen allmählichen Wechsel zwischen einem veralteten Verschlüsselungsverfahren und einem neuen und als besser eingeschätzten Verschlüsselungsverfahren durchzuführen, ohne dabei die Anzahl der vor einem gesicherten und verschlüsselten Datenaustausch erforderlichen digitalen Zertifikat zu erhöhen, die vorab von dem Sender an den Empfänger übermittelt werden müssen. Es müssen lediglich die betreffenden Zertifikatschlüsselhashwerte für das alte und für das neue Verschlüsselungsverfahren und die mindestens eine Ressourcenidentifizierungsinformation in dem digitalen Zertifikat enthalten sein, über welche die betreffenden öffentlichen Schlüssel abgerufen werden können.

Es ist optional vorgesehen, dass das digitale Zertifikat mehrere Ressourcenidentifizierungsinformationen zu jeweils unterschiedlichen digital kontaktierbaren Ressourcen aufweist, über die jeweils mindestens ein öffentlicher Schlüssel abgerufen werden kann. So kann beispielsweise für jeden öffentlichen Schlüssel, zu dem Zertifikatschlüsselinformationen in dem digitalen Zertifikat enthalten sind, jeweils eine zugeordnete Ressourcenidentifizierungsinformation hinterlegt sein. Die verschiedenen öffentlichen Schlüssel können beispielsweise bei verschiedenen von dem Sender vorgegebenen Speichereinrichtung hinterlegt sein. Es ist ebenfalls möglich, dass einzelne oder alle öffentliche Schlüssel in einem Verzeichnisdienst hinterlegt sind, bei welchem zahlreiche öffentliche Schlüssel hinterlegt sind.

Es ist ebenfalls denkbar, dass für einen einzelnen öffentlichen Schlüssel mehrere verschiedene Ressourcenidentifizierungsinformationen hinterlegt sind. Sollte ein Abrufen des öffentlichen Schlüssels über die einer ersten Ressourcenidentifizierungsinformation zugeordneten Ressource nicht möglich sein, weil beispielsweise die betreffende Speichereinrichtung temporär nicht erreichbar ist oder dauerhaft ausfällt, kann der ausgewählte öffentliche Schlüssel von einer zweiten Ressource abgerufen werden, die über die zweite Ressourcenidentifizierungsinformation identifiziert und zugänglich wird. Auf diese Weise wird die Übermittlung des öffentlichen Schlüssels von dem Sender zu dem Empfänger mit Hilfe eines einzigen digitalen Zertifikats besonders zuverlässig und ausfallsicher gestaltet.

Um die Sicherheit für den Austausch des öffentlichen Schlüssels zwischen dem Sender und dem Empfänger zu erhöhen kann optional vorgesehen sein, dass die digitale Zertifikatsignatur auch die mindestens eine Ressourcenidentifizierungsinformation signiert. Auf diese Weise kann sichergestellt werden, dass auch eine Manipulation der Ressourcenidentifizierungsinformation durch unbefugte Dritte erschwert bzw. verhindert werden kann. Mit der signierten Ressourcenidentifizierungsinformation kann sichergestellt werden, dass nicht nur der über die Ressource abrufbare öffentliche Schlüssel tatsächlich den betreffenden öffentlichen Schlüssel des Zertifikatinhabers entspricht, sondern dass auch der betreffende öffentliche Schlüssel von derjenigen Ressource abgerufen wird, die von dem Zertifikatsinhaber vorgegeben wurde.

Im Hinblick auf die allmähliche Einführung neuer Verschlüsselungsverfahren mit komplexen und großen Datenmengen umfassenden öffentlichen Schlüssel ist es gemäß einer vorteilhaften Ausgestaltung des Erfindungsgedankens vorgesehen, dass die Zertifikatschlüsselinformationen auch einen öffentlichen Schlüssel des Zertifikatinhabers enthalten. So kann das erfindungsgemäße digitale Zertifikat beispielsweise einen ersten öffentlichen Schlüssel für ein erstes Verschlüsselungsverfahren enthalten, dass aktuell häufig verwendet und deshalb von vielen Teilnehmern der Public-Key-Infrastruktur akzeptiert wird. Ein derartiger öffentlicher Schlüssel kann beispielsweise eine Schlüssellänge von 256 Bit oder 1024 Bit aufweisen. Solange der Empfänger lediglich dieses erste Verschlüsselungsverfahren anwenden kann ist der betreffende erste öffentliche Schlüssel bereits in dem digitalen Zertifikat enthalten und muss nicht gesondert von einer externen Ressource abgerufen werden. Falls der Empfänger jedoch bereits ein neu entwickeltes zweites Verschlüsselungsverfahren anwenden kann und deshalb einen dafür geeigneten zweiten öffentlichen Schlüssel benötigt, dessen Schlüssellänge beispielsweise wesentlich größer ist, kann der Empfänger über die in dem digitalen Zertifikat bereits enthaltene Ressourcenidentifizierungsinformation den zweiten öffentlichen Schlüssel abrufen und für die verbesserte Verschlüsselung mit dem zweiten Verschlüsselungsverfahren werden.

Das aktuell häufig verwendete X.509-Zertifikat enthält neben einem öffentlichen Schlüssel die Möglichkeit, innerhalb einer bereits in dem Standard vorgesehenen Erweiterung zusätzliche Informationen in dem digitalen Zertifikat zu hinterlegen. Es ist nicht ausgeschlossen, dass diese Informationen beispielsweise ein erfindungsgemäßer Zertifikatschlüsselhashwert sowie eine Ressourcenidentifizierungsinformation enthalten. Das erfindungsgemäße digitale Zertifikat kann deshalb innerhalb einer Public-Key-Infrastruktur wie ein X.509-Zertifikat verwendet und zwischen einem Sender und einem Empfänger ausgetauscht werden, ohne dass zuvor die Einführung eines neuen Standards erforderlich wäre.

Die Erfindung betrifft auch ein Verfahren zum sicheren Übermitteln eines öffentlichen Schlüssels eines Zertifikatinhabers innerhalb einer Public-Key-Infrastruktur, wobei ein mit einer digitalen Zertifikatsignatur signiertes digitales Zertifikat mit Zertifikatsinhaberinformationen und mit Zertifikatschlüsselinformationen von einem Sender an einen Empfänger übertragen wird, und wobei der Empfänger anhand des übermittelten digitalen Zertifikats Zugriff auf einen öffentlichen Schlüssel des Zertifikatinhabers erhält.

Bei vielen herkömmlichen digitalen Zertifikaten beinhalten die Zertifikatschlüsselinformationen ausschließlich einen einzigen öffentlichen Schlüssel und zusätzliche Schlüsseleigenschaftsinformationen, wie beispielsweise Informationen über das betreffende Verschlüsselungsverfahren sowie über weitere Parameter, die für die Verwendung des öffentlichen Schlüssels mit dem dafür vorgesehenen Verschlüsselungsverfahren notwendig oder hilfreich sind. Wenn der Empfänger das Verschlüsselungsverfahren, für welches der öffentliche Schlüssel in dem digitalen Zertifikat vorgesehen ist, nicht verwenden und einsetzen kann, kann das an den Empfänger übermittelte digitale Zertifikat nicht weiter verwendet werden. Der Sender muss ein weiteres digitales Zertifikat mit einem anderen öffentlichen Schlüssel an den Empfänger übermitteln, damit der Empfänger nach Möglichkeit mit dem zweiten öffentlichen Schlüssel und dem zugeordneten Verschlüsselungsverfahren den gewünschten Datenaustausch durchführen kann. Insbesondere bei der Übermittlung öffentlicher Schlüssel, die eine große Datenmenge beinhalten, ist der Aufwand für die Übermittlung eines entsprechend großen digitalen Zertifikats erheblich und kann insbesondere für den Fall, dass der betreffende öffentliche Schlüssel von dem Empfänger nicht verwendet werden kann, zu einer erheblichen Verzögerung bei dem Aufbau einer gesicherten Kommunikation zwischen dem Sender und dem Empfänger führen.

Es wird deshalb als eine weitere Aufgabe der vorliegenden Erfindung gesehen, ein Verfahren zum sicheren Übermitteln eines öffentlichen Schlüssels eines Zertifikatinhabers von einem Sender zu einem Empfänger so auszugestalten, dass der Aufwand für die Übermittlung eines für die nachfolgende Kommunikation geeigneten öffentlichen Schlüssels auch bei öffentlichen Schlüsseln mit einer großen Datenmenge möglichst gering ist und ein rascher Aufbau einer gesicherten Kommunikation begünstigt wird.

Diese Aufgabe wird erfindungsgemäß dadurch gelöst, dass der Empfänger in einem Schlüsselabrufschritt anhand einer in dem digitalen Zertifikat enthaltenen Ressourcenidentifizierungsinformation eine datenübertragende Verbindung zu einer digitalen kontaktierbaren Ressource erzeugt und über die Ressource den öffentlichen Schlüssel des Zertifikatinhabers abruft, und das in einem Überprüfungsschritt ein von dem Empfänger mit einer vorgegebenen Hashfunktion von dem öffentlichen Schlüssel ermittelter Schlüsselhashwert mit einem in dem digitalen Zertifikat enthaltenen und mit einer digitalen Zertifikatsignatur signierten Zertifikatschlüsselhashwert verglichen wird, wobei der dem Zertifikatinhaber zugeordnete öffentliche Schlüssel akzeptiert und von dem Empfänger verwendet wird, wenn der ermittelte Schlüsselhashwert mit dem signierten Zertifikatschlüsselhashwert übereinstimmt. Bevor der Empfänger den öffentlichen Schlüssel von der Ressource abruft kann der Empfänger in einem vorab durchgeführten Zertifikatüberprüfungsschritt die Authentizität des Zertifikats überprüfen oder beispielsweise von einer Validierungseinrichtung überprüfen lassen und ein gegebenenfalls ungültiges digitales Zertifikat verwerfen, ohne dass die große Datenmenge eines öffentlichen Schlüssels von dem Sender an den Empfänger übertragen werden muss.

Die Ressourcenidentifizierungsinformation kann beispielsweise auch auf eine Ressource verweisen, von welcher der Empfänger den öffentlichen Schlüssel wesentlich schneller abrufen kann, als es die Übermittlung des digitalen Zertifikats von dem Sender zu dem Empfänger über eine gegebenenfalls langsame Anbindung des Senders an die Public-Key-Infrastruktur erlauben würde. Auch dadurch kann die für den Austausch des öffentlichen Schlüssels benötigte Zeit reduziert werden. Durch den Vergleich des in dem digitalen Zertifikats signierten Zertifikatschlüsselhashwert mit dem Schlüsselhashwert, der von dem Empfänger zu dem aus der Ressource abgerufenen öffentliche Schlüssel ermittelt wurde, kann überprüft und sichergestellt werden, dass es sich um den öffentlichen Schlüssel des Zertifikatinhabers handelt.

Gemäß einer besonders vorteilhaften Ausgestaltung des erfindungsgemäßen Verfahrens ist vorgesehen, dass der Empfänger in einem dem Schlüsselabrufschritt vorausgehenden Schlüsselidentifizierungsschritt in einer vorgebbaren Reihenfolge für mehrere verschiedene Verschlüsselungsverfahren überprüft, ob die Zertifikatschlüsselinformationen des digitalen Zertifikats für eine vorgegebenes Verschlüsselungsverfahren eine Schlüsseleigenschaftsinformation enthalten, und dass in dem nachfolgenden Schlüsselabrufschritt für den Fall, dass die Zertifikatschlüsselinformationen für ein überprüftes Verschlüsselungsverfahren eine Zertifikatschlüsselinformation enthalten, über die der Schlüsseleigenschaftsinformation zugeordnete Ressource der zugeordnete öffentliche Schlüssel abgerufen wird. Das von dem Sender an den Empfänger übermittelte digitale Zertifikat kann auf diese Weise dazu verwendet werden, dem Empfänger gleichzeitig mehrere öffentliche Schlüssel und dementsprechend verschiedene Verschlüsselungsverfahren anzubieten, die seitens des Senders für eine nachfolgende Kommunikation und einen gesicherten Datenaustausch zwischen dem Sender und Empfänger möglich sind und angeboten werden können. Es ist demzufolge nicht erforderlich, im Falle einer Ablehnung eines Verschlüsselungsverfahrens durch den Empfänger erneut ein weiteres digitales Zertifikat von dem Sender zu dem Empfänger zu übermitteln, welches dann auch noch erneut von dem Empfänger oder von einer externen Validierungseinrichtung überprüft werden muss.

Zudem kann mit dem erfindungsgemäß ausgestalteten Verfahren ein allmählicher Umstieg von einem aktuell gängigen Verschlüsselungsverfahren mit entsprechenden öffentlichen Schlüsseln zu einem neuen Verschlüsselungsverfahren durchgeführt werden, ohne dass zumindest zu Beginn der Umstellung aufgrund der dann noch häufigen Zurückweisung des neuen Verschlüsselungsverfahrens von dem Empfänger mit einer deshalb erhöhten Anzahl von Übermittlungen eines digitalen Zertifikats gerechnet werden muss. Zudem können mit dem erfindungsgemäßen Verfahren auch öffentliche Schlüssel mit einer großen Datenmenge von mehreren Kilobyte oder Megabyte von dem Sender angeboten werden, ohne dass dadurch die in der Public-Key-Infrastruktur zwischen den Teilnehmern über digitale Zertifikate ausgetauschte Datenmenge ansteigt.

Gemäß einer optionalen Ausgestaltung des Erfindungsgedankens ist vorgesehen, dass in einem Ressourcenidentifizierungsschritt in einer vorgebbaren Reihenfolge für mehrere einer einzigen Schlüsseleigenschaftsinformation zugeordneten Ressourcenidentifizierungsinformationen eine datenübertragende Verbindung zu einer mit der Ressourcenidentifizierungsinformation identifizierten digital kontaktierbaren Ressource erzeugt wird, um anschließend in dem Schlüsselabrufschritt über die betreffende Ressource den öffentlichen Schlüssel des Zertifikatinhabers abzurufen. Sollte die Datenübertragung des öffentlichen Schlüssels von der zunächst ausgewählten Ressource nicht möglich sein oder die Datenübertragungsrate geringer als eine vorgegebene Datenübertragungsmindestrate sein, kann der Empfänger auf die nächste Ressource zurückgreifen und den Abruf des öffentlichen Schlüssels von der betreffenden Ressource einleiten. Dadurch werden die Zuverlässigkeit und die Ausfallsicherheit bei dem Austausch von öffentlichen Schlüsseln erheblich verbessert. Zudem kann der für den Austausch des öffentlichen Schlüssels erforderliche Zeitaufwand in vielen Fällen und insbesondere bei öffentlichen Schlüsseln mit einer großen Datenmenge deutlich verringert werden.

Einer Ausgestaltung des Erfindungsgedankens zufolge ist optional vorgesehen, dass in dem Schlüsselabrufschritt zunächst überprüft wird, ob über die Ressource ein öffentlicher Schlüssel des Zertifikatinhabers abgerufen werden kann, und dass der Schlüsselabrufschritt abgebrochen wird, falls kein öffentlicher Schüssel über die Ressource abgerufen werden kann. So kann beispielsweise der Sender in dem digitalen Zertifikat Zertifikatschlüsselinformationen für eine Anzahl von Verschlüsselungsverfahren und entsprechenden öffentlichen Schlüsseln aufnehmen. Falls der Sender ein einzelnes Verschlüsselungsverfahren oder einen einzelnen öffentlichen Schlüssel zukünftig nicht mehr zulassen oder verwenden will, kann der Sender den entsprechenden öffentlichen Schlüssel von der zugeordneten Ressource löschen und dadurch verhindern, dass der betreffende öffentliche Schlüssel oder das diesem öffentlichen Schlüssel zugeordnete Verschlüsselungsverfahren von einem Empfänger verwendet wird. Wenn das digitale Zertifikat des Senders Zertifikatschlüsselinformationen zu mehreren öffentlichen Schlüsseln enthält kann der Empfänger für einen anderen öffentlichen Schlüssel einen Schlüsselabrufschritt durchführen, der in einem vorausgehenden Schlüsselidentifizierungsschritt identifiziert wurde. Ebenso kann der Empfänger gegebenenfalls für eine andere in einem Ressourcenidentifizierungsschritt identifizierte Ressource ein Schlüsselabrufschritt durchführen, falls der betreffende öffentliche Schlüssel zwar grundsätzlich verwendet werden soll, jedoch die zunächst identifizierte Ressource beispielsweise aus technischen Gründen nicht digital kontaktiert werden kann oder nicht für den Abruf des öffentlichen Schlüssels zur Verfügung steht. Für diese Alternativen bei dem Abrufen eines öffentlichen Schlüssels ist kein weiterer Datenaustausch zwischen dem Sender und dem Empfänger notwendig, sodass die Kommunikation zwischen dem Sender und dem Empfänger vereinfacht und beschleunigt wird. Zudem wird die erforderliche Belastung des Netzwerks für den Datenaustausch eines öffentlichen Schlüssels verringert.

Im Hinblick auf eine weitere Beschleunigung des erfindungsgemäßen Verfahrens und auf einen weiter verringerten Datenaustausch für die Übermittlung des öffentlichen Schlüssels an den Empfänger ist gemäß einer vorteilhaften Ausgestaltung des Erfindungsgedankens vorgesehen, dass der Empfänger einen über die Ressource abgerufenen öffentlichen Schlüssel des Zertifikatinhabers in einer Speichereinrichtung des Empfängers abspeichert und vor einer zu einem späteren Zeitpunkt erneut vorgesehenen Durchführung des Schlüsselabrufschritts überprüft, ob der einem digitalen Zertifikat des Senders zugeordnete öffentliche Schlüssel bereits in der Speichereinrichtung des Empfängers abgespeichert ist, und dass der Empfänger gegebenenfalls den in der Speichereinrichtung abgespeicherten öffentlichen Schlüssel für den nachfolgenden Überprüfungsschritt verwendet. Der Empfänger kann für verschiedene Sender jeweils einen zugeordneten öffentlichen Schlüssel abspeichern. Gegebenenfalls kann der Empfänger auch für einen einzelnen Sender mehrere dem Empfänger mitgeteilte öffentliche Schlüssel abrufen und in der Speichereinrichtung des Empfängers abspeichern. Bei einem nachfolgenden erneuten Austausch eines digitalen Zertifikats von einem bereits bekannten Sender an den Empfänger kann der Empfänger vorab überprüfen, ob dem Empfänger zu diesem Sender bereits ein öffentlicher Schlüssel vorliegt, der zu dem erneut übermittelten digitalen Zertifikat passt.

Sofern der Empfänger einen bereits vorliegenden und passenden öffentlichen Schlüssel des Senders identifiziert hat, kann der Empfänger auf einen erneuten Abruf des betreffenden öffentlichen Schlüssels von der durch die Ressourcenidentifizierungsinformation in dem erneut übermittelten digitalen Zertifikat identifizierte Ressource verzichten und stattdessen den bereits in der Speichereinrichtung des Empfängers hinterlegten öffentlichen Schlüssel des Senders verwenden. Insbesondere bei einem öffentlichen Schlüssel, der eine große Datenmenge umfasst, kann dadurch die vorbereitende Kommunikation zwischen einem Sender und einem Empfänger erheblich reduziert und beschleunigt werden, bevor anschließend der Empfänger den öffentlichen Schlüssel des Senders verwenden kann.

Mit dem erfindungsgemäßen Verfahren können weiterhin alle vorangehend im Zusammenhang mit dem digitalen Zertifikat beschriebenen Optionen ausgenutzt und als optionale Verfahrensschritte integriert werden. Dies betrifft insbesondere die Möglichkeit, verschiedene Zertifikatschlüsselinformationen, eventuelle Schlüsseleigenschaftsinformationen sowie die Ressourcenidentifizierungsinformationen mit in die digitale Zertifikatsignatur mit aufzunehmen, um auch die Authentizität dieser weiteren Informationen überprüfbar zu machen und eine Manipulation dieser weiteren Informationen nach Möglichkeit auszuschließen. Die Aufnahme dieser zusätzlichen Informationen in die digitale Zertifikatsignatur kann in Einzelfällen bei der Signierung bzw. bei dem Ausstellen der Zertifikatsignatur durch die Zertifizierungsstelle mit einem geringfügig höheren Aufwand verbunden sein, der in der Praxis jedoch keine nennenswerte Rolle spielt. Bei der Überprüfung der digitalen Zertifikatsignatur durch den Empfänger oder durch eine externe Validierungseinrichtung fällt dagegen trotz des verbesserten Schutzes vor einer unerwünschten Manipulation des digitalen Zertifikats und der darin mitgeteilten Informationen regelmäßig kein erhöhter Aufwand an.

Nachfolgend werden verschiedene Ausgestaltungen des Erfindungsgedankens näher erläutert, die in der Zeichnung exemplarisch und schematisch dargestellt sind. Es zeigt:
Figur 1 eine schematische Darstellung eines erfindungsgemäß ausgestalteten digitalen Zertifikats,
Figur 2 eine schematische Darstellung eines abweichend zu Figur 1 und ebenfalls erfindungsgemäß ausgestalteten digitalen Zertifikats,
Figur 3 eine schematische Darstellung eines wiederum abweichend ausgestalteten erfindungsgemäßen digitalen Zertifikats,
Figur 4 eine schematische Darstellung eines erneut abweichend ausgestalteten erfindungsgemäßen digitalen Zertifikats, und
Figur 5 eine schematische Darstellung eines erfindungsgemäßen Verfahrensablaufs zum Übermitteln eines öffentlichen Schlüssels eines Zertifikatinhabers innerhalb einer Public-Key-Infrastruktur unter Verwendung eines erfindungsgemäß ausgestalteten digitalen Zertifikats.

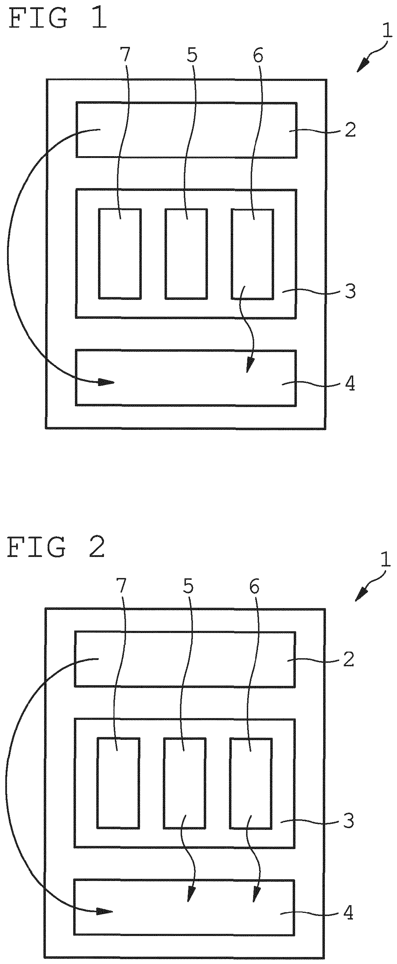

Ein in Figur 1 schematisch dargestelltes erfindungsgemäß ausgestaltetes digitales Zertifikat 1 weist Zertifikatinhaberinformationen 2 sowie Zertifikatschlüsselinformationen 3 auf. Das digitale Zertifikat 1 ist von einer vertrauenswürdigen Zertifizierungsstelle mit einer digitalen Zertifikatsignatur 4 versehen worden, die nach einem vorgegebenen Signaturverfahren ausgehend von Informationen ermittelt wurde, die in dem digitalen Zertifikat 1 enthalten sind. Die digitale Zertifikatsignatur 4 kann von einem Empfänger des digitalen Zertifikats 1 überprüft werden, um die Authentizität des digitalen Zertifikats 1 und der darin enthaltenen Informationen des Zertifikatinhabers feststellen zu können.

Die Zertifikatinhaberinformationen 2 können in der üblichen Art und Weise Informationen zur Identifizierung des Zertifikatinhabers enthalten, beispielsweise einen Personennamen oder einen Unternehmensnamen oder eine E-Mail-Adresse, oder aber auch eine eindeutige Geräteadresse wie beispielsweise eine MAC-Adresse oder die Identifizierung eines Dienstes, der für einen Datenaustausch zwischen Teilnehmern einer Public-Key-Infrastruktur verwendet werden soll. Abweichend von derzeit verwendeten und standardisierten digitalen Zertifikaten enthalten die Zertifikatschlüsselinformationen 3 keinen öffentlichen Schlüssel eines Zertifikatinhabers, der über die Zertifikatinhaberinformationen 2 identifiziert ist. Die Zertifikatschlüsselinformationen 3 enthalten eine Ressourcenidentifizierungsinformation 5 und einen Zertifikatschlüsselhashwert 6. Die Ressourcenidentifizierungsinformation 5 kann beispielsweise ein standardisierter einheitlicher Bezeichner für Ressourcen (URI) oder ein einheitlicher Ressourcenzeiger (URL) sein, mit welchem eine digital kontaktierbare Ressource eindeutig identifiziert wird, sodass der Empfänger des digitalen Zertifikats 1 einen in dem digitalen Zertifikat 1 nicht enthaltenen öffentlichen Schlüssel des Zertifikatinhabers über die betreffende Ressource abrufen und zu dem Empfänger übertragen kann.

Der Zertifikatschlüsselhashwert 6 ist ein Hashwert, der ausgehend von dem öffentlichen Schlüssel, der über die Ressource abrufbar ist, vorab mit einer vorgegebenen Hashfunktion ermittelt wurde. Eine Hashfunktion bildet üblicherweise eine große Datenmenge in einer durch die Hashfunktion vorgegebenen Art und Weise auf einen regelmäßig wesentlich kürzeren Hashwert ab. Eine für die Verschlüsselung von Daten besonders gut geeignete Hashfunktion erschwert es einem unbefugten Dritten, unterschiedlichen Ausgangsdaten denselben Hashwert zuordnen zu können oder solche unterschiedlichen Ausgangsdaten mit demselben Hashwert gezielt zu finden, um eine unerwünschte Manipulation der Ausgangsdaten verhindern zu können, sodass die Authentizität der mit dem Hashwert signierten Ausgangsdaten zuverlässig bestätigt werden kann.

Zusätzlich können die Zertifikatschlüsselinformationen 3 auch Schlüsseleigenschaftsinformationen 7 enthalten. Die Schlüsseleigenschaftsinformationen 7 umfassen beispielsweise Informationen über das zugeordnete Verschlüsselungsverfahren, für welches der öffentliche Schlüssel gedacht ist, oder einzelne Parameter, die für die Durchführung des Verschlüsselungsverfahrens notwendig oder optional sind, oder aber beispielsweise Informationen über die Gültigkeit oder über die Gültigkeitsdauer des öffentlichen Schlüssel, sodass zusätzlich zur Validierung des digitalen Zertifikats 1 auch anhand der in dem digitalen Zertifikat 1 enthaltenen Informationen eine Überprüfung der Gültigkeit des entsprechenden öffentlichen Schlüssel möglich ist.

Die digitale Zertifikatsignatur 4 wird ausgehend von den Zertifikatinhaberinformationen 2 und dem Zertifikatschlüsselhashwert 6 ermittelt und in dem digitalen Zertifikat 1 hinterlegt. Durch eine Überprüfung der digitalen Zertifikatsignatur 4 können damit die Authentizität des Zertifikatinhabers und die Authentizität des öffentlichen Schlüssels bestätigt werden, der über die Ressource abgerufen werden kann und für welchen die Hashfunktion denselben Schlüsselhashwert ergeben muss, der als Zertifikatschlüsselhashwert 6 in dem digitalen Zertifikat 1 hinterlegt ist und Bestandteil der digitalen Zertifikatsignatur 4 geworden ist.

In Figur 2 ist ein abweichend ausgestaltetes Ausführungsbeispiel für ein erfindungsgemäßes digitales Zertifikat 1 dargestellt. Um eine unerwünschte Manipulation der Ressourcenidentifizierungsinformation zu verhindern kann vorgesehen sein, dass die digitale Zertifikatsignatur 4 nicht nur ausgehend von den Zertifikatinhaberinformationen 2 und dem Zertifikatschlüsselhashwert 6 ermittelt wird, sondern zusätzlich die Ressourcenidentifizierungsinformation 5 berücksichtigt und diese Ressourcenidentifizierungsinformationen 5 als weitere Ausgangsdaten herangezogen werden, auf deren Grundlage die Berechnung der digitalen Zertifikatsignatur 4 durchgeführt wird. Eine nachträgliche Manipulation der in dem digitalen Zertifikat 1 hinterlegten Ressourcenidentifizierungsinformation 5 wird dadurch effektiv ausgeschlossen. Der Empfänger kann nach einer erfolgreichen Überprüfung der digitalen Zertifikatsignatur 4 darauf vertrauen, dass der öffentliche Schlüssel von derjenigen Ressource abgerufen wird, die der Zertifikatinhaber ausgewählt und über die Ressourcenidentifizierungsinformation 5 vorgegeben hat.

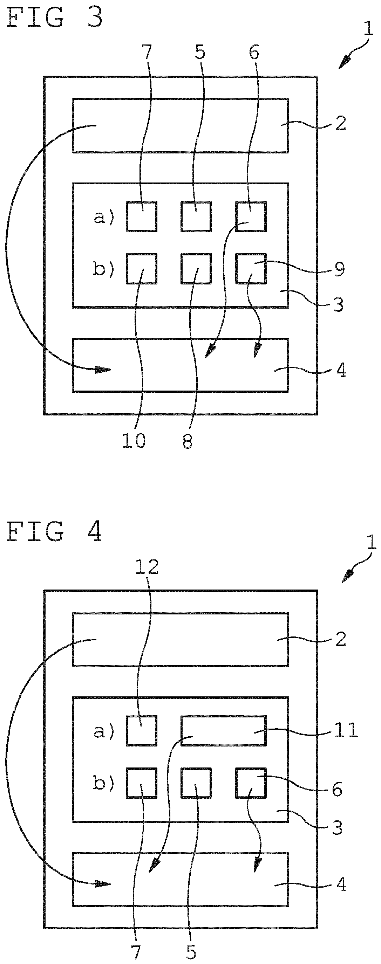

Bei dem in Figur 3 schematisch dargestellten Ausführungsbeispiel enthalten die Zertifikatschlüsselinformationen 3 für zwei verschiedene öffentliche Schlüssel des Zertifikatinhabers jeweils eine Ressourcenidentifizierungsinformation 5, 8, einen Zertifikatschlüsselhashwert 6, 9 und Schlüsseleigenschaftsinformationen 7, 10. Die beiden unterschiedlichen Schlüssel bzw. die jeweils zugeordneten Informationen innerhalb des digitalen Zertifikats 1 sind durch die Bezugszeichen a) und b) verdeutlicht. Der Empfänger dieses digitalen Zertifikats 1 kann nach einer von dem Empfänger vorgegebenen Reihenfolge anhand von beispielsweise den jeweiligen Schlüsseleigenschaftsinformationen 7, 10 überprüfen, ob für ein von dem Empfänger gewünschtes Verschlüsselungsverfahren ein passender öffentlicher Schlüssel des Zertifikatinhabers zur Verfügung steht und über die betreffende Ressource abgerufen werden kann. Sobald von dem Empfänger ein geeigneter öffentlicher Schlüssel identifiziert wurde, kann der Empfänger den betreffenden öffentlichen Schlüssel über diejenige Ressource, die über die zugeordnete Ressourcenidentifizierungsinformation 5, 8 identifiziert wird, abrufen und zu dem Empfänger übermitteln.

Im Hinblick auf einen allmählichen Übergang von derzeit genutzten Verschlüsselungsverfahren und digitalen Zertifikaten, bei denen ein öffentlicher Schlüssel des Zertifikatinhabers in dem digitalen Zertifikat hinterlegt und enthalten ist, auf verbesserte und zukünftig genutzte Verschlüsselungsverfahren kann es vorteilhaft sein, wenn in einem daran angepassten erfindungsgemäßen digitalen Zertifikat 1 zusätzlich auch ein weiterer öffentlicher Schlüssel enthalten ist und zusammen mit dem digitalen Zertifikat 1 von dem Sender an den Empfänger übermittelt wird. Eine entsprechende Ausgestaltung eines erfindungsgemäßen digitalen Zertifikats 1 ist in Figur 4 schematisch dargestellt. Während für einen ersten öffentlichen Schlüssel die zugeordneten Zertifikatschlüsselinformationen a) den öffentlichen Schlüssel 11 und entsprechende Schlüsseleigenschaftsinformationen 12 umfassen, enthalten die Zertifikatschlüsselinformationen b) für einen zweiten öffentlichen Schlüssel lediglich dessen Ressourcenidentifizierungsinformation 5, den Zertifikatschlüsselhashwert 6 und entsprechende Schlüsseleigenschaftsinformationen 7 für den öffentlichen Schlüssel, der im Bedarfsfall über die mit der Ressourcenidentifizierungsinformation 5 identifizierte Ressource abgerufen werden kann.

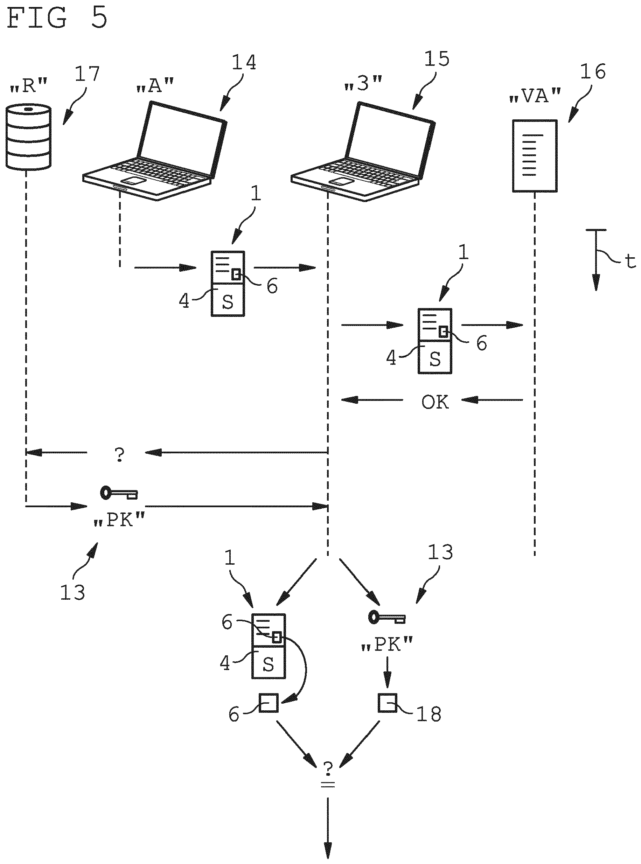

Bei einem in Figur 5 schematisch dargestellten erfindungsgemäßen Verfahrensablauf zum sicheren Übermitteln eines öffentlichen Schlüssels "PK" 13 eines Zertifikatinhabers innerhalb einer Public-Key-Infrastruktur wird zunächst ein mit einer digitalen Zertifikatsignatur "S" 4 signiertes digitales Zertifikat 1 von einem Sender "A" 14 an einen Empfänger "B" 15 übermittelt. Das digitale Zertifikat 1 enthält neben den Zertifikatinhaberinformationen auch den Zertifikatschlüsselhashwert 6 sowie die in Figur 5 nicht gesondert dargestellten Ressourcenidentifizierungsinformationen 5 und Schlüsseleigenschaftsinformationen 7, wie sie in den schematischen Abbildungen zu exemplarischen Ausgestaltungen eines solchen digitalen Zertifikats 1 in den Figuren 1 bis 4 gezeigt und enthalten sind.

Der Empfänger "B" 15 übermittelt das digitale Zertifikat 1 in einem Signaturüberprüfungsschritt zur Überprüfung an eine externe Validierungseinrichtung "VA" 16, welche nach einer erfolgreich durchgeführten Überprüfung die Authentizität des digitalen Zertifikats 1 bestätigt.

Anschließend kontaktiert der Empfänger "B" 15 in einem Schlüsselabrufschritt eine über die in dem digitalen Zertifikat 1 enthaltene Ressourcenidentifizierungsinformation 5 identifizierte Ressource "R" 17 und ruft von der Ressource "R" 17 den öffentlichen Schlüssel "PK" 13 des Zertifikatinhabers ab, von welchem daraufhin eine Kopie von der Ressource "R" 17 zu dem Empfänger "B" 15 übertragen wird. Der Empfänger "B" 15 ist dann im Besitz des öffentlichen Schlüssels "PK" 13 des Zertifikatinhabers.

In einem nachfolgenden Schlüsselüberprüfungsschritt berechnet der Empfänger "B" 15 mit Hilfe einer vorgegebenen Hashfunktion einen Schlüsselhashwert 18 und vergleicht diesen berechneten Schlüsselhashwert 18 mit dem Zertifikatschlüsselhashwert 6 in dem digitalen Zertifikat 1. Mit einer Übereinstimmung des berechneten Schlüsselhashwerts 18 mit dem von dem Sender in dem digitalen Zertifikat 1 übermittelten Zertifikatschlüsselhashwert 6 wird die Authentizität des öffentlichen Schlüssels "PK" 13 des Zertifikatinhabers bestätigt, anderenfalls dieser öffentliche Schlüssel "PK" 13 verworfen und nicht für einen nachfolgenden und in Figur 5 nicht mehr dargestellten Datenaustausch beispielsweise im Rahmen einer Kommunikation zwischen dem Sender "A" 14 und dem Empfänger "B" 15 verwendet.

Bei dem erfindungsgemäßen Verfahren können optional auch die vorangehend schon beschriebenen und nicht gesondert dargestellten Verfahrensschritte beispielsweise eines Schlüsselidentifizierungsschritts oder eines Ressourcenidentifizierungsschritts durchgeführt werden.

## Patentansprüche

1. Digitales Zertifikat (1) zur Verwendung in einer Public-Key-Infrastruktur, wobei das digitale Zertifikat (1) Zertifikatinhaberinformationen (2) und Zertifikatschlüsselinformationen (3) enthält, und wobei das digitale Zertifikat (1) von einer Zertifizierungsstelle mit einer digitalen Zertifikatsignatur (4) signiert ist, mit welcher die Zertifikatinhaberinformationen (2) und mindestens eine Zertifikatschlüsselinformation (3) signiert sind, **dadurch gekennzeichnet, dass** das digitale Zertifikat (1) mindestens eine Ressourcenidentifizierungsinformation (5) zu einer ersten digital kontaktierbaren Ressource "R" (17) aufweist, über die mindestens ein öffentlicher Schlüssel "PK" (13) abgerufen werden kann, dass das digitale Zertifikat (1) einen Zertifikatschlüsselhashwert (6) aufweist, der dem mindestens einen über die mindestens eine Ressource "R" (17) abrufbaren öffentlichen Schlüssel "PK" (13) zugeordnet ist, und dass die digitale Zertifikatsignatur (4) auch den mindestens einen Zertifikatschlüsselhashwert (6) signiert.

2. Digitales Zertifikat (1) nach Anspruch 1, **dadurch gekennzeichnet, dass** das digitale Zertifikat (1) mehrere Zertifikatschlüsselhashwerte (6) aufweist, die jeweils einem über die mindestens eine Ressource "R" (17) abrufbaren öffentlichen Schlüssel "PK" (132) zugeordnet sind.

3. Digitales Zertifikat (1) nach Anspruch 2, **dadurch gekennzeichnet, dass** die Zertifikatschlüsselinformationen (3) für die mehreren öffentlichen Schlüssel "PK" (13) jeweils mindestens eine zugeordnete Schlüsseleigenschaftsinformation (7, 10, 12) enthalten.

4. Digitales Zertifikat (1) nach einem der voranstehenden Ansprüche, **dadurch gekennzeichnet, dass** das digitale Zertifikat (1) mehrere Ressourcenidentifizierungsinformationen (5, 8) zu jeweils unterschiedlichen digital kontaktierbaren Ressourcen "R" (17) aufweist, über die jeweils mindestens ein öffentlicher Schlüssel "PK" (13) abgerufen werden kann.

5. Digitales Zertifikat (1) nach einem der voranstehenden Ansprüche, **dadurch gekennzeichnet, dass** die digitale Zertifikatsignatur (4) auch die mindestens eine Ressourcenidentifizierungsinformation (5, 8) signiert.

6. Digitales Zertifikat (1) nach einem der voranstehenden Ansprüche, **dadurch gekennzeichnet, dass** die Zertifikatschlüsselinformationen (3) auch einen öffentlichen Schlüssel (11) des Zertifikatinhabers enthalten.

7. Verfahren zum sicheren Übermitteln eines öffentlichen Schlüssels "PK" (13) eines Zertifikatinhabers innerhalb einer Public-Key-Infrastruktur, wobei ein mit einer digitalen Zertifikatsignatur (4) signiertes digitales Zertifikat (1) mit Zertifikatinhaberinformationen (2) und mit Zertifikatschlüsselinformationen (3) von einem Sender "A" (14) an einen Empfänger "B" (15) übertragen wird, und wobei der Empfänger "B" (15) anhand des übermittelten digitalen Zertifikats (1) Zugriff auf einen öffentlichen Schlüssel "PK" (13) des Zertifikatinhabers erhält, **dadurch gekennzeichnet, dass** der Empfänger "B" (15) in einem Schlüsselabrufschritt anhand einer in dem digitalen Zertifikat enthaltenen Ressourcenidentifizierungsinformation (5, 8) eine datenübertragende Verbindung zu einer digital kontaktierbaren Ressource "R" (17) erzeugt und über die Ressource "R" (17) den öffentlichen Schlüssel "PK" (13) des Zertifikatinhabers abruft, und dass in einem Überprüfungsschritt ein von dem Empfänger "B" (15) mit einer vorgegebenen Hashfunktion von dem öffentlichen Schüssel "PK" (13) ermittelter Schlüsselhashwert (18) mit einem in dem digitalen Zertifikat (1) enthaltenen und mit einer digitalen Zertifikatsignatur (4) signierten Zertifikatschlüsselhashwert (6) verglichen wird, wobei der dem Zertifikatinhaber zugeordnete öffentliche Schlüssel "PK" (13) akzeptiert und von dem Empfänger "B" (15) verwendet wird, wenn der ermittelte Schlüsselhashwert (18) mit dem signierten Zertifikatschlüsselhashwert (6) übereinstimmt.

8. Verfahren nach Anspruch 7, **dadurch gekennzeichnet, dass** der Empfänger "B" (15) in einem dem Schlüsselabrufschritt vorausgehenden Schlüsselidentifizierungsschritt in einer vorgebbaren Reihenfolge für mehrere verschiedene Verschlüsselungsverfahren überprüft, ob die Zertifikatschlüsselinformationen (3) des digitalen Zertifikats (1) für ein vorgegebenes Verschlüsselungsverfahren eine Schlüsseleigenschaftsinformation (7, 10, 12) enthalten, und dass in dem nachfolgenden Schlüsselabrufschritt für den Fall, dass die Zertifikatschlüsselinformationen (3) für ein überprüftes Verschlüsselungsverfahren eine Schlüsseleigenschaftsinformation (7, 10, 12) enthalten, über die der Schlüsseleigenschaftsinformation (7, 10, 12) zugeordnete Ressource "R" (17) der zugeordnete öffentliche Schlüssel "PK" (13) abgerufen wird.

9. Verfahren nach Anspruch 7 oder Anspruch 8, **dadurch gekennzeichnet, dass** in einem Ressourcenidentifizierungsschritt in einer vorgebbaren Reihenfolge für mehrere einer Schlüsseleigenschaftsinformation (7, 10) zugeordneten Ressourcenidentifizierungsinformationen (5, 8) eine datenübertragende Verbindung zu einer mit der Ressourcenidentifizierungsinformation (5, 8) identifizierten digital kontaktierbaren Ressource "R" (17) erzeugt wird, um anschließend in dem Schlüsselabrufschritt über die betreffende Ressource "R" (17) den öffentlichen Schlüssel "PK" (13) des Zertifikatinhabers abzurufen.

10. Verfahren nach einem der Ansprüche 7 bis 9, **dadurch gekennzeichnet, dass** in dem Schlüsselabrufschritt zunächst überprüft wird, ob über die Ressource "R" (17) ein öffentlicher Schlüssel "PK" (13) des Zertifikatinhabers abgerufen werden kann, dass der Schlüsselabrufschritt abgebrochen wird, falls kein öffentlicher Schüssel "PK" (13) über die Ressource "R" (17) abgerufen werden kann, und dass gegebenenfalls für einen anderen in einem vorausgehenden Schlüsselidentifizierungsschritt identifizierten öffentlichen Schlüssel ein Schlüsselabrufschritt durchgeführt wird, oder dass gegebenenfalls für eine andere in einem Ressourcenidentifizierungsschritt identifizierte Ressource ein Schlüsselabrufschritt durchgeführt wird.

11. Verfahren nach einem der Ansprüche 7 bis 10, **dadurch gekennzeichnet, dass** der Empfänger "B" (15) einen über die Ressource "R" (17) abgerufenen öffentlichen Schlüssel "PK" (13) des Zertifikatinhabers in einer Speichereinrichtung des Empfängers "B" (15) abspeichert und vor einer zu einem späteren Zeitpunkt erneut vorgesehenen Durchführung des Schlüsselabrufschritts überprüft, ob der einem digitalen Zertifikat (1) des Senders "A" (14) zugeordnete öffentliche Schlüssel "PK" (13) bereits in der Speichereinrichtung des Empfängers "B" (15) abgespeichert ist, und dass der Empfänger "B" (15) gegebenenfalls den in der Speichereinrichtung abgespeicherten öffentlichen Schlüssel "PK" (13) für den nachfolgenden Überprüfungsschritt verwendet.

## Claims

1. Digital certificate (1) for use in a public-key infrastructure, wherein the digital certificate (1) contains certificate holder information (2) and certificate key information (3), and wherein the digital certificate (1) is signed by a certification authority with a digital certificate signature (4), with which the certificate holder information (2) and at least one item of certificate key information (3) are signed, **characterized in that** the digital certificate (1) comprises at least one item of resource identification information (5) about a first digitally contactable resource "R" (17) via which at least one public Key "PK" (13) can be retrieved, that the digital certificate (1) comprises a certificate key hash value (6) that is assigned to the at least one public key "PK" (13) that can be retrieved via the at least one resource "R" (17), and that the digital certificate signature (4) also signs the at least one certificate key hash value (6).

2. Digital certificate (1) according to claim 1, **characterized in that** the digital certificate (1) comprises a plurality of certificate key hash values (6), each of which is assigned to in each case one public key "PK" (132) that can be retrieved via the at least one resource "R" (17).

3. Digital certificate (1) according to claim 2, **characterized in that** the items of certificate key information (3) each contain at least one assigned key property information (7, 10, 12) for the plurality of public keys "PK" (13) .

4. Digital certificate (1) according to one of the preceding claims, **characterized in that** the digital certificate (1) comprises multiple items of resource identification information (5, 8) for different digitally contactable resources "R" (17), via which in each case at least one public key "PK" (13) can be retrieved.

5. Digital certificate (1) according to one of the preceding claims, **characterized in that** the digital certificate signature (4) also signs the at least one item of resource identification information (5, 8).

6. Digital certificate (1) according to one of the preceding claims, **characterized in that** the items of certificate key information (3) also contain a public key (11) of the certificate holder.

7. Method for securely transmitting a public key "PK" (13) of a certificate holder within a public-key infrastructure, wherein a digital certificate (1), signed with a digital certificate signature (4), having certificate holder information (2) and certificate key information (3) is transmitted from a sender "A" (14) to a recipient "B" (15), and wherein the recipient "B" (15), based on the transmitted digital certificate (1), obtains access to a public key "PK" (13) of the certificate holder, **characterized in that** the recipient "B" (15), in a key retrieval step, using resource identification information (5, 8) contained in the digital certificate, generates a data-transmitting connection to a digitally contactable resource "R" (17) and retrieves the public key "PK" (13) of the certificate holder via the resource "R" (17), and that in a verification step a hash key value (18) determined by the recipient "B" (15) using a predetermined hash function of the public Key "PK" (13) is compared with a certificate key hash value (6) contained in the digital certificate (1) and signed with a digital certificate signature (4), wherein the public key "PK" (13) assigned to the certificate holder is accepted and used by the recipient "B" (15) if the determined key hash value (18) matches the signed certificate key hash value (6).

8. Method according to claim 7, **characterized in that** the recipient "B" (15) in a key identification step preceding the key retrieval step, in a predeterminable order for a plurality of different encryption methods, verifies whether the certificate key information (3) of the digital certificate (1) for a given encryption method contain a key property information (7, 10, 12), and that in the subsequent key retrieval step in the case that the certificate key information (3) for a verified encryption method contain key property information (7, 10, 12), the assigned public key "PK" (13) is retrieved via the resource "R" (17) assigned to the key property information (7, 10, 12).

9. Method according to claim 7 or claim 8, **characterized in that** in a resource identification step, in a predeterminable order for a plurality of items of resource identification information (5, 8) assigned to a key property information (7, 10), a data-transmitting connection to a digitally contactable resource "R" (17) identified with the resource identification information (5, 8) is generated in order to subsequently, in the key retrieval step, retrieve the public key "PK" (13) of the certificate holder via the relevant resource "R" (17).

10. Method according to one of claims 7 to 9, **characterized in that** in the key retrieval step first it is checked whether a public key "PK" (13) of the certificate holder can be retrieved via the resource "R" (17), that the key retrieval step is aborted if no public key "PK" (13) can be retrieved via the resource "R" (17), and that, if applicable, a key retrieval step is performed for another public key identified in a previous key identification step, or that, if applicable, a key retrieval step is performed for another resource identified in a resource identification step.

11. Method according to any one of claims 7 to 10, **characterized in that** the recipient "B" (15) stores a public key "PK" (13) of the certificate holder retrieved via the resource "R" (17) in a storage device of the recipient "B" (15) and, before performing the key retrieval step again, which is planned at a later point in time, checks whether the public key "PK" (13) assigned to a digital certificate (1) of the sender "A" (14) is already stored in the storage device of the recipient "B" (15), and that the recipient "B" (15), if applicable, uses the public key "PK" (13) stored in the storage device for the subsequent verification step.

## Revendications

1. Certificat numérique (1) destiné à être utilisé dans une infrastructure à clé publique, dans lequel le certificat numérique (1) contient des informations de titulaire de certificat (2) et des informations de clé de certificat (3), et dans lequel le certificat numérique (1) est signé par une autorité de certification avec une signature de certificat numérique (4), avec laquelle l'information de titulaire du certificat (2) et au moins une information de clé de certificat (3) sont signées, **caractérisé en ce que** le certificat numérique (1) présente au moins une information d'identification de ressources (5) concernant une première ressource « R » (17) avec laquelle un premier contact numérique peut être établi, par l'intermédiaire de laquelle au moins une clé publique « PK » (13) peut être appelée, que le certificat numérique (1) présente une valeur de hachage de clé de certificat (6), qui est associée à l'au moins une clé publique « PK » (13) pouvant être appelée par l'intermédiaire de l'au moins une ressource « R » (17), et que la signature de certificat numérique (4) signe également l'au moins une valeur de hachage de clé de certificat (6).

2. Certificat numérique (1) selon la revendication 1, **caractérisé en ce que** le certificat numérique (1) présente plusieurs valeurs de hachage de clé de certificat (6), qui sont associées respectivement à une clé publique « PK » (132) pouvant être appelée par l'au moins une ressource « R » (17).

3. Certificat numérique (1) selon la revendication 2, **caractérisé en ce que** les informations de clé de certificat (3) pour les plusieurs clés publiques « PK » (13) contiennent respectivement au moins une information de caractéristique de clé (7, 10, 12) associée.

4. Certificat numérique (1) selon l'une quelconque des revendications précédentes, **caractérisé en ce que** le certificat numérique (1) présente plusieurs informations d'identification de ressources (5, 8) concernant respectivement différentes ressources « R » (17) avec lesquelles un contact numérique peut être établi, par l'intermédiaire desquelles respectivement au moins une clé publique « PK » (13) peut être appelée.

5. Certificat numérique (1) selon l'une quelconque des revendications précédentes, **caractérisé en ce que** la signature de certificat numérique (4) signe également l'au moins une information d'identification de ressources (5, 8).

6. Certificat numérique (1) selon l'une quelconque des revendications précédentes, **caractérisé en ce que** les informations de clé de certificat (3) contiennent également une clé publique (11) du titulaire de certificat.

7. Procédé de transmission en toute sécurité d'une clé publique « PK » (13) d'un titulaire de certificat au sein d'une infrastructure à clé publique, dans lequel un certificat numérique (1) signé avec une signature de certificat numérique (4) est transmis avec des informations de titulaire de certificat (2) et avec des informations de clé de certificat (3) par un émetteur « A » (14) à un destinataire « B » (15), et dans lequel le destinataire « B » (15) se voit donner l'accès à une clé publique « PK » (13) du titulaire de certificat à l'aide du certificat numérique transmis (1), **caractérisé en ce que** le destinataire « B » (15) génère, lors d'une étape d'appel de clé, à l'aide d'une information d'identification de ressources (5, 8) contenue dans le certificat numérique, une connexion de transfert de données avec une ressource « R » (17) avec laquelle un contact numérique peut être établi et appelle, par l'intermédiaire de la ressource « R » (17), la clé publique « PK » (13) du titulaire de certificat, et que lors d'une étape de vérification, une valeur de hachage de clé (18) déterminée par le destinataire « B » (15) avec une fonction de hachage spécifiée de la clé publique « PK » (13) est comparée à une valeur de hachage de clé de certificat (6) contenue dans le certificat numérique (1) et signée avec une signature de certificat numérique (4), dans lequel la clé publique « PK » (13) associée au titulaire de certificat est acceptée et est utilisée par le destinataire « B » (15) lorsque la valeur de hachage de clé (18) déterminée concorde avec la valeur de hachage de clé de certificat (6) signée.

8. Procédé selon la revendication 7, **caractérisé en ce que** le destinataire B » (15) vérifie lors d'une étape d'identification de clé précédent l'étape d'appel de clé dans un ordre pouvant être spécifié pour plusieurs procédés de cryptage différents si les informations de clé de certificat (3) du certificat numérique (1) contiennent pour un procédé de cryptage spécifié une information de caractéristique de clé (7, 10, 12), et que lors de l'étape d'appel de clé qui suit si les informations de clé de certificat (3) contiennent pour un procédé de cryptage vérifié, une information de caractéristique de clé (7, 10, 12), la clé publique « PK » (13) associée est appelée par l'intermédiaire de la ressource « R » (17) associée à l'information de caractéristique de clé (7, 10, 12).

9. Procédé selon la revendication 7 ou la revendication 8, **caractérisé en ce que** lors d'une étape d'identification de ressources, dans un ordre pouvant être spécifié pour plusieurs informations d'identification de ressources (5, 8) associées à une information de caractéristique de clé (7, 10), une connexion de transmission de données avec une ressource « R » (17), avec laquelle un contact numérique peut être établi, identifiée avec l'information d'identification de ressources (5, 8) est générée pour appeler ensuite la clé publique « PK » (13) du titulaire de certificat par l'intermédiaire de la ressource « R » (17) concernée lors de l'étape d'appel de clé.

10. Procédé selon l'une quelconque des revendications 7 à 9, **caractérisé en ce que** lors de l'étape d'appel de clé, il est d'abord vérifié si une clé publique « PK » (13) du titulaire de certificat peut être appelée par l'intermédiaire de la ressource « R » (17), que l'étape d'appel de clé est interrompue si aucune clé publique « PK » (13) ne peut être appelée par l'intermédiaire de la ressource « R » (17), et qu'une étape d'appel de clé est réalisée éventuellement pour une autre clé publique identifiée lors d'une étape d'identification de clé qui précède, ou qu'une étape d'appel de clé est réalisée éventuellement pour une autre ressource identifiée lors d'une étape d'identification de ressources.

11. Procédé selon l'une quelconque des revendications 7 à 10, **caractérisé en ce que** le destinataire « B » (15) sauvegarde une clé publique « PK » (13), appelée par l'intermédiaire de la ressource « R » (17), du titulaire de certificat dans un dispositif de stockage du destinataire « B » (15) et vérifie avec une réalisation de l'étape d'appel de clé prévue à nouveau à un moment ultérieur si la clé publique « PK » (13) associée à un certificat numérique (1) de l'émetteur « A » (14) est déjà sauvegardée dans le système de stockage du destinataire « B » (15), et que le destinataire « B » (15) utilise éventuellement la clé publique « PK » (13) sauvegardée dans le système de stockage pour l'étape de vérification qui suit.
